# EUROPÄISCHE PATENTANMELDUNG

(11) **EP 1 925 884 A1**
(43) Veröffentlichungstag der Anmeldung: **28.05.2008**
(21) Anmeldenummer: 06124859.7
(22) Anmeldetag: 27.11.2006
(51) Int. Cl.: F23L 15/04, F23D 14/66, F02G 1/055

(54) **Wärmequelle**

(71) Anmelder: Stirling Systems AG, 8200 Schaffhausen (CH)
(72) Erfinder: Andreas Schlegel, CH 8135 Langnau am Albis (CH)
(74) Vertreter: Dr. Graf & Partner

(57) **Zusammenfassung**

Die Wärmequelle (1) umfasst eine Brennkammer (3) zur Erzeugung von Wärme mit hohem Temperaturniveau, und umfasst einen in die Brennkammer (3) mündenden Brenner (2) und einen Wärmetauscher (4), wobei die Brennkammer (3) Fluid leitend mit einem Abgaskanal (4c) verbunden ist, welcher durch den Wärmetauscher (4) verläuft, und wobei die Wärmequelle (1) einen ersten und einen zweiten Fluid leitenden Kanal (2c,2e) umfasst, über welche ein Zuluftstrom der Brennkammer (3) zuführbar ist, wobei der erste Kanal (2c) derart verläuft, dass der Zuluftstrom ohne einen Wärmeaustausch mit Abgasen der Brennkammer (3) zugeleitet ist, und wobei der zweite Kanal (2e) durch den Wärmetauscher (4) verlaufend der Brennkammer (3) zugeleitet ist, und wobei ein Regelventil (8) derart wirkend angeordnet ist, dass die Verteilung des Zuluftstroms zwischen dem ersten und dem zweiten Kanal (2c,2e) variierbar ist.

## Beschreibung

Die Erfindung betrifft eine Wärmequelle gemäss dem Oberbegriff von Anspruch 1.

### Stand der Technik

Es ist bekannt mittels kleinen, dezentralen Blockheizkraftwerken aus Brennstoffenergie elektrische Energie und Heizungswärme zu erzeugen. Um diese kleinen Einheiten mit einem hohen elektrischen Wirkungsgrad zu betreiben sind Wärmequellen erforderlich, welche Temperaturen bis etwa 1000 °C erzeugen. Der Antrieb eines Stirling-Motors mit einer befeuerten Wärmequelle stellt höchste Ansprüche an die Befeuerung beziehungsweise an das Befeuerungsverfahren. Um mit dem Stirling-Motor einen hohen Wirkungsgrad zu erzielen ist im Brennraum der Wärmequelle ein heisses Gas mit einer möglichst hohen Temperatur erwünscht, ohne jedoch das Material des Stirlingmotors thermisch zu beschädigen. Diese hohen Temperaturen haben jedoch eine erhöhte Schadstoffemission (NOx und CO) zur Folge. Um diese gegensätzlichen Anforderungen optimal zu erfüllen werden Stirling-Motoren während dem Dauerbetrieb mit einer konstanten Wärmeleistung versorgt.

Die Druckschrift WO 01/65099 offenbart einen Stirling-Motor sowie eine Wärmequelle zum Beheizen des Stirling-Motors mit Hochtemperturwärme. Diese Vorrichtung weist den Nachteil auf, dass die abgegebene Wärmemenge konstant ist. Ein Blockheizkraftwerk mit einem derartigen Stirling-Motor mit Wärmequelle weist somit den Nachteil auf, dass die Heizleistung nicht variierbar ist. Dies ist insbesondere während der kalten Jahreszeit ein Nachteil, da der erhöhte Heizleistungsbedarf mit weiteren Wärmequelle, beispielsweise mit einer zusätzlichen Öl- oder Gasheizung, gedeckt werden muss.

### Darstellung der Erfindung

Aufgabe der Erfindung ist es eine Wärmequelle für ein Blockheizkraftwerk zu bilden, welche eine variierbare Heizleistung aufweist. Eine weitere Aufgabe der Erfindung ist es die Wärmequelle derart auszubilden, dass diese mit unterschiedlichen Brennstoffen betreibbar ist.

Diese Aufgabe wird gelöst mit einer Wärmequelle aufweisend die Merkmale von Anspruch 1. Die Unteransprüche 2 bis 9 betreffen weitere, vorteilhaft ausgestaltete Wärmequellen. Die Aufgabe wird weiter gelöst mit einem Verfahren zum Betrieb einer Wärmequelle aufweisend die Merkmale von Anspruch 10.

Die Aufgabe wird insbesondere gelöst mit einer Wärmequelle umfassend eine Brennkammer zur Erzeugung von Wärme mit hohem Temperaturniveau, sowie umfassend einen in die Brennkammer mündenden Brenner und einen Wärmetauscher, wobei die Brennkammer Fluid leitend mit einem Abgaskanal verbunden ist, welcher durch den Wärmetauscher verläuft, und wobei die Wärmequelle einen ersten und einen zweiten Fluid leitenden Kanal umfasst, über welche ein Zuluftstrom der Brennkammer zuführbar ist, wobei der erste Kanal derart verläuft, dass der Zuluftstrom ohne einen Wärmeaustausch mit Abgasen der Brennkammer zugeleitet ist, und wobei der zweite Kanal durch den Wärmetauscher verlaufend der Brennkammer zugeleitet ist, und wobei ein Regelventil derart wirkend angeordnet ist, dass die Verteilung des Zuluftstroms zwischen dem ersten und dem zweiten Kanal variierbar ist.

Unter dem Begriff Zuluftstrom wird hierin ein Zustrom aus Luft oder auch einem anderen Oxidationsmittel verstanden. Vorzugsweise wird jedoch Luft als Zustrom verwendet.

Die erfindungsgemässe Wärmequelle umfasst eine Brennkammer sowie einen Wärmetauscher, wobei die Brennkammer über einen Abgaskanal Fluid leitend mit dem Wärmetauscher verbunden ist. Die erfindungsgemässe Wärmequelle umfasst zwei unterschiedliche Zuluftströme, beziehungsweise zwei unterschiedlich verlaufende, Fluid leitende Kanäle, über welche der Brennkammer Luft zugeleitet wird. Ein erster Kanal verläuft ohne einen Wärmetausch mit Abgasen in die Brennkammer, vorzugsweise von ausserhalb der Wärmequelle auf direkten Wege in die Brennkammer, sodass der Brennkammer über diesen ersten Kanal ein Zuluftstrom mit relativ kühler Luft, üblicherweise mit einer Temperatur von Umgebungsluft, zugeführt wird. Ein zweiter Kanal verläuft über den Wärmetauscher, in welchem Wärme mit dem Abgas ausgetauscht wird, sodass der Brennkammer über diesen zweiten Kanal ein Zuluftstrom mit sehr heisser Luft, mit einer hohen Temperatur von beispielsweise 500 - 700°C zugeführt wird. Die erfindungsgemässe Wärmequelle umfasst ein Regelventil, mit welchem die Verteilung des Zuluftstroms zwischen erstem und zweitem Kanal steuerbar ist, was den Vorteil ergibt, dass die von der Wärmequelle über das Abgas abgegebene Wärmeleistung ansteuerbar ist. Die Wärme in der Brennkammer lässt sich zudem über die zugeführte Menge Brennstoff, welche in der Brennkammer verbrennt, beeinflussen. Daher kann die von der erfindungsgemässen Wärmequelle abgegebene Wärmeleistung beispielsweise mit folgendem Verfahren variiert werden: Die Temperatur des Gases innerhalb der Brennkammer wird auf einem konstanten oder annähernd konstanten Wert gehalten, um den Stirling-Motor mit einem konstant hohen Wirkungsgrad zu betreiben. Um die von der Wärmequelle abgegebene Wärmeleistung zu erhöhen wird über den ersten Kanal mehr Zuluft und über den zweiten Kanal weniger Zuluft der Brennkammer zugeführt. Zudem wird dem Brenner mehr Brennstoff zugeführt, vorzugsweise derart, dass die Temperatur des Gases in der Brennkammer konstant oder annähernd konstant bleibt. Dies hat zur Folge, dass die Stirlingmaschine mit konstantem Wert betreibbar ist, wogegen die aus der Wärmequelle am kalten Ende des Rekuperators austretenden Abgase eine Niedertemperaturwärme mit höherer Wärmeleistung aufweisen, welche für Heizzwecke genutzt werden kann.

Ein Blockheizkraftwerk betrieben mit der erfindungsgemässen Wärmequelle weist somit den Vorteil auf, dass die zum Heizen zur Verfügung stehende Wärmeleistung variierbar ist.

In einem einfachen Betriebsverfahren erzeugt die Wärmequelle nur zwei unterschiedliche Wärmeleistungen, eine geringere oder eine höhere abgegebene Wärmeleistung, indem die Zuluft entweder nur über den ersten oder nur über den zweiten Kanal der Brennkammer zugeführt wird. Dabei wird der Brennkammer vorzugsweise derart viel Brennstoff zugeführt, dass die Temperatur des Gases in der Brennkammer konstant bleibt. Ein Blockheizkraftwerk betrieben mit diesem einfachen Betriebsverfahren weist somit eine konstante, über den Stirling-Motor und dessen Generator erzeugte elektrische Leistung auf, wogegen die abgegebene Wärmeleistung zwischen einem geringen Wert, beispielsweise 6 kW und einem hohen Wert, beispielsweise 9 kW gewählt werden kann.

In einem anspruchsvolleren Betriebsverfahren stehen als abgegebene Wärmeleistung nicht nur die beiden Eckwerte (geringer Wert / hoher Wert) zur Verfügung, sondern auch die zwischen diesen Werten liegenden Wärmeleistungen, sodass die abgegebene Wärmeleistung veränderbar beziehungsweise modulierbar ist. Um dies zu erreichen wird der Brennkammer sowohl über den ersten als auch den zweiten Kanal Zuluft zugeführt, wobei diese beiden zugeführten Teilströme Zuluft und die zugeführte Menge Brennstoff vorzugsweise derart dosiert wird, dass die Temperatur in der Brennkammer einen etwa konstanten Wert aufweist, und die abgegebene Wärmemenge dem gewünschten Wert entspricht. Dieses anspruchsvollere Betriebsverfahren weist den Vorteil auf, dass der Stirling-Motor mit konstant hohem Wirkungsgrad betreibbar ist, und die von der Wärmequelle abgegebene Wärmeleistung, welche vorteilhafter weise zu Heizzwecken verwendet wird, bezüglich den jeweiligen Erfordernissen variierbar ist. Ein derartiges Blockheizkraftwerk weist somit den Vorteil auf, dass der insbesondere im Winter erhöhte und schwankende Wärmeleistungsbedarf zum Beheizen eines Hauses ohne zusätzlichen Brenner bereitgestellt werden kann.

Die erfindungsgemässe Wärmequelle kann beispielsweise mit Öl, Gas oder einem vergasten Feststoff betrieben werden. Der vergaste Feststoff wird beispielsweise durch Pyrolyse gewonnen. Die Wärmequelle kann auch derart ausgestaltet sein, dass dieselbe Wärmequelle mit Öl oder Gas oder vergastem Feststoff betreibbar ist.

### Kurze Beschreibung der Zeichnungen

Die zur Erläuterung der Ausführungsbeispiele verwendeten Zeichnungen zeigen:
Fig. 1 eine bekannte Wärmequelle im Längsschnitt;
Fig. 2 eine erfindungsgemässe, schematisch dargestellte Wärmequelle im Längsschnitt;
Fig. 3 eine Grafik der erzeugten, variierbaren Wärmeleistung,
Fig. 4a eine perspektivische Ansicht eines als Dreiwegventil ausgestalteten Regelventils;
Fig. 4b das in Figur 4a dargestellte Regelventil in halboffener Stellung;
Fig. 4c das in Figur 4a dargestellte Regelventil mit einem offenen und einem geschlossenen Kanal.

Grundsätzlich sind in den Zeichnungen gleiche Teile mit gleichen Bezugszeichen versehen.

### Wege zur Ausführung der Erfindung

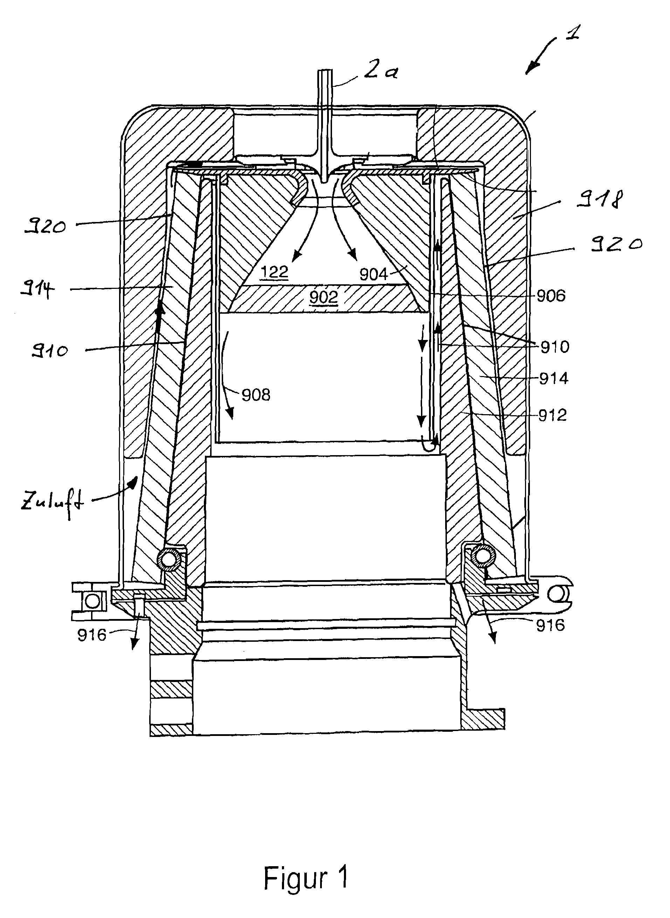

Figur 1 zeigt schematisch einen Längsschnitt durch eine aus der Druckschrift WO 01/65099 bekannten Wärmequelle 1. Die Wärmequelle 1 umfasst eine von einem Metallrohr 906 umgebene Brennkammer 122, eine Innenisolation 912, einen Wärmetauscher 914 sowie eine Aussenisolation 918. Eine Brennstoffzuleitung 2a führt der Brennkammer 122 Brennstoff zu. Entlang der Oberfläche des Wärmetauschers 914 verläuft ein Luftkanal 920, in welchem sich die unten eintretende Zuluft erwärmt, bevor diese oben gemeinsam mit dem Brennstoff in die Brennkammer 122 einströmt. Die durch den Verbrennungsprozess erzeugten Verbrennungsgase 908 werden über den Abgaskanal 910 entlang der Innenseite des Wärmetauschers 914 der Abgasaustrittsöffnung 916 zugeführt. Diese Wärmequelle 1 wird unten mit einem nicht dargestellten Stirlingmotor verbunden, welcher einen Generator antreibt, um derart ein Blockheizkraftwerk auszubilden, welches sowohl elektrische Energie als auch Wärmeenergie erzeugt. Dieses Blockheizkraftwerk wird derart in einem optimalen Betriebszustand betrieben, dass eine konstante elektrische Leistung und eine konstante Wärmeleistung erzeugt werden.

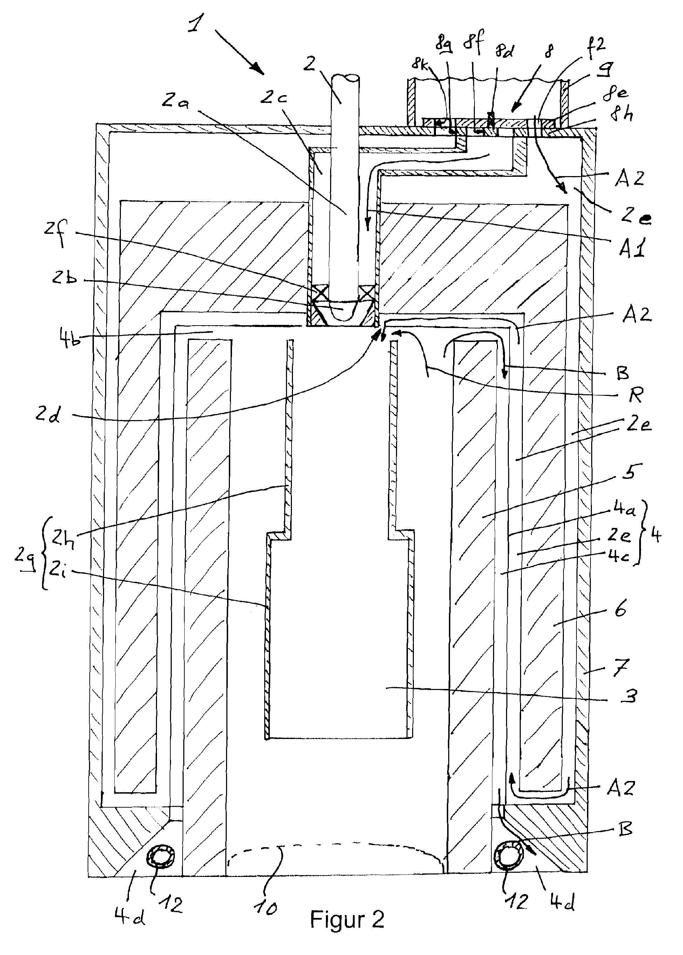

Figur 2 zeigt ein Ausführungsbeispiel der erfindungsgemässen Wärmequelle schematisch dargestellt in einem Längsschnitt. Diese Wärmequelle 1 weist den Vorteil auf, dass deren abgegebene Wärmeleistung variierbar ist. Die Wärmequelle 1 umfasst einen Ölbrenner 2 mit Brennstoffzuleitung 2a und Brennstoffdüse 2b, welche in den Brennraum 3 münden. Die Brennstoffzuleitung 2a ist von einem ersten Fluid leitenden Kanal 2c umgeben, in welchem ein erster Zuluftstrom A1 über einen Verwirbelungseinsatz 2f der Brennstoffdüse 2b zugeleitet wird. Die Wärmequelle 1 umfasst einen zweiten Fluid leitenden Kanal 2e, welcher über einen Wärmetauscher 4, auch als Rekuperator bezeichnet, geleitet ist, und über ringförmig um den Auslass der Brennstoffdüse 2b angeordnete Austrittsöffnungen 2d in den Brennraum 3 mündet. Im zweiten Zuführkanal 2e wird der Brennstoffdüse 2b ein zweiter Zuluftstrom A2 zugeführt. Die derart geleitete Luft wird im Bereich der Brennstoffdüse 2b mit austretendem Brennstoff vermischt. Der Brennstoffdüse 2b nachfolgend und innerhalb der Brennkammer 3 ist ein Flammrohr 2g umfassend ein Vorverdampfungsrohr 2h und ein Stationärrohr 2i angeordnet. Der Öl- oder auch ein Gasbrenner 2 wird vorzugsweise derart betrieben, dass der Brennstoff und die Luft innerhalb der Brennkammer 3 eine möglichst homogene Durchmischung erfahren, und dass sich in der Brennkammer 3 ein Rezirkulationsstrom R mit einer Rezirkulationsrate r von kleiner oder gleich zwei ausbildet, oder sogar eine Rezirkulationsrate r zwischen zwei und zehn ausbildet. Die Rezirkulationsrate r ist das Verhältnis des Rezirkulationsstromes R bezüglich des gesamten Zuluftstroms A1 und A2. Dadurch wird ein grosses Flammenvolumen ohne lokale Temperaturspitzen erzeugt, was die Bildung von NOx signifikant reduziert. Ein derartig betriebener Ölbrenner wird auch als ein Hochrezirkulationsbrenner bezeichnet.

Die Brennkammer 3 der Wärmequelle 1 ist von einer Innenisolation 5 sowie einer Aussenisolation 6 umgeben. Zwischen der Innen- und Aussenisolation 5, 6 verläuft ein nur schematisch dargestellter Wärmetauscher 4, welcher eine Trennwand 4a, einen Teilabschnitt des zweiten Luftkanals 2e, sowie einen Teilabschnitt das Abgaskanals 4c umfasst. Der Abgaskanal 4c beginnt an der Austrittsöffnung 4b der Brennkammer 3 und leitet den Abgasstrom B über den Wärmetauscher 4 dem Abgasauslass 4d zu. Am Abgasauslass 4d ist ein Wasser leitendes Wärmeaufnahmerohr 12 angeordnet, welches dem Abgasstrom B Wärme für Heizzwecke entzieht. Zwischen der Aussenwand 7 und der Aussenisolation 6 verläuft im dargestellten Ausführungsbeispiel der zweite Zuluftkanal 2e nach unten, und ist danach über den Wärmetauscher 4 und die Austrittsöffnung 2d in den Brennraum 3 geleitet. Der Kopf einer Stirlingmaschine 10, welcher nur schematisch angedeutet ist, ragt in den Brennraum 3 hinein, um derart beheizt zu werden.

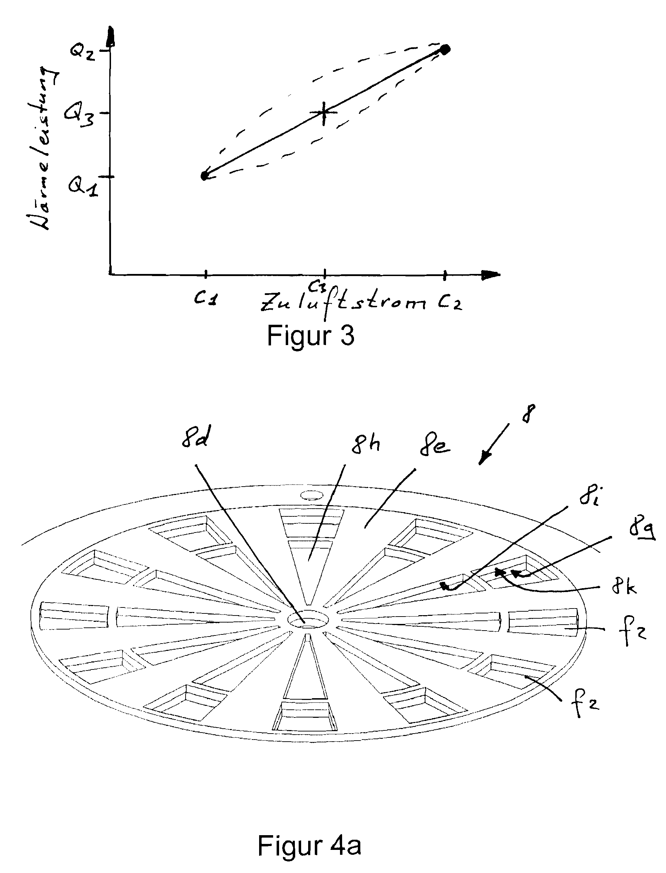

Die beiden Zuluftkanäle 2c, 2e sind mit einem Ventil 8 versehen, um die zufliessende Luftmenge pro Zeiteinheit anzusteuern. Jeder Zuluftkanal 2c, 2e könnte mit einem separaten, individuell ansteuerbaren Regelventil 8, beispielsweise je einem elektromagnetischen Auf-Zu-Ventil, versehen sein. In der einfachsten Ausgestaltung ist jedes Regelventil 8 als Auf-Zu-Ventile ausgestaltet, welche nur eine Offen- und eine Geschlossenstellung einnehmen können. Dies erlaubt entweder nur dem ersten Zuluftkanal 2c, oder nur dem zweiten Zuluftkanal 2e, oder sowohl dem ersten als auch dem zweiten Zuluftkanal 2c, 2e Luft zuzuführen. Um die Abgastemperatur in der Brennkammer 3 ungefähr konstant zu halten ist beim Schalten der Regelventile 8 zudem die über die Brennstoffdüse 2b zugeleitete Brennstoffmenge anzupassen. Dies ermöglicht die Wärmequelle vorzugsweise derart zu betreiben, dass die vom Stirlingmotor in der Brennkammer 3 abgeführte Wärmeleistung konstant bleibt, sodass der mit dem Stirlingmotor verbundene Generator eine konstante elektrische Leistung erzeugt, wogegen die über das Abgas B am Auslass 4d zur Verfügung stehende Wärmeleistung, wie in Figur 3 dargestellt, drei unterschiedliche Werte Q1, Q2 und Q3 aufweisen kann.

Figur 3 zeigt die am Abgasauslass 4d zur Verfügung stehende Wärmeleistung Q in Funktion des Luftzuflussstromes. Falls dem ersten Zuluftkanal 2c keine Zuluft zugeführt wird, so strömt die gesamte Luftmenge C1 durch den zweiten Zuluftkanal 2e, wobei am Abgasauslass 4d die Wärmeleistung Q1 anliegt. Falls dem zweiten Zuluftkanal 2e keine Zuluft zugeführt wird, so strömt die gesamte Luftmenge C2 durch den ersten Zuluftkanal 2c, wobei am Abgasauslass 4d die Wärmeleistung Q2 anliegt. Nebst der Luftmenge wird zudem die zugeleitete Menge Brennstoff entsprechend verändert. Bei durch das Ventil 8 gleichzeitig geöffnetem Zuluftkanal 2c und 2e strömt die gesamte Luftmenge C3 teilweise durch den ersten und teilweise durch den zweiten Zuluftkanal 2c, 2e, wobei am Abgasauslass 4d die Wärmeleistung Q3 anliegt.

Im Ausführungsbeispiel gemäss Figur 2 wird ein Dreiwegregelventil 8 verwendet, welches wie folgt ausgestaltet ist: Das Gehäuse 7 weist eine Grundplatte 8h mit Durchlassöffnungen 8f und 8g auf, wobei die Wärmequelle 1 derart ausgestaltete Trennwände und Rohre aufweist, dass die Durchlassöffnungen 8f in den ersten Zuluftkanal 2c münden und die Durchlassöffnungen 8g in den zweiten Zuluftkanal 2e münden. Auf der Grundplatte 8h ist eine um das Drehlager 8d drehbare, als Scheibe ausgestaltete Abdeckung 8e angeordnet, welche derart angeordnete Durchlassöffnungen 8g, 8f aufweist, dass in Abhängigkeit der Drehstellung der Scheibe 8e entweder nur die Durchlassöffnungen 8f oder die Durchlassöffnungen 8g vollständig geöffnet sind, oder dass sowohl die Durchlassöffnung 8f als auch die Durchlassöffnung 8g teilweise geöffnet sind. Ein Luftzuführkanal 9 ist mit dem Ventil 8 verbunden. Stromaufwärts könnte sowohl beim Luftzuführkanal 9 als auch bei der Brennstoffzuleitung 2a eine nicht dargestellte Pumpe 11 angeordnet sein. Die Durchlassöffnungen 8g, 8f könnten auch derart angeordnet sein, dass die Abdeckung 8e durch ein lineares Verschieben die Durchtrittsöffnung verschliesst beziehungsweise öffnet.

Das in Figur 2 dargestellte Regelventil 8 weist zwei Extremstellungen auf, in welchen nur eine der beiden Durchlassöffnungen 8g, 8f geöffnet ist. In diesen beiden Stellungen weist der zugeführte Luftstrom, wie in Figur 3 dargestellt, die Flussrate C 1 beziehungsweise C2 auf, wobei C1, C2 z.B. in der Einheit m³/s dargestellt ist, und die Wärmeleistung am Abgasauslass 4d weist den Wert Q1 beziehungsweise Q2 auf, wobei Q1, Q2 z.B. in Kilo Joule (kJ) pro Sekunde dargestellt ist. Das in Figur 2 dargestellte Regelventil 8 weist jedoch zudem die Eigenschaft auf, dass es derart betreibbar ist, dass die Verteilung des Zuluftstromes zwischen dem ersten und dem zweiten Kanal 2c, 2e variierbar ist. Durch die dem Luftzuführkanal 9 vorgelagerte, nicht dargestellte Pumpe 11 kann zudem die Luftmenge pro Zeiteinheit des Zuluftstroms variiert werden. Die Wärmequelle 1 ist dadurch derart ansteuerbar, dass die am Abgasauslass 4d zur Verfügung stehende Wärmeleistung Q je nach Erfordernis im Bereich zwischen Q1 und Q2 variierbar ist, indem der Zuluftstrom entsprechend zwischen dem ersten und dem zweiten Kanal 2c, 2e aufgeteilt wird, und zudem, falls erforderlich, die Luftmenge pro Zeiteinheit sowie die Brennstoffmenge pro Zeiteinheit über die Pumpe 11 entsprechend angesteuert wird. Das Ventil 8 und die Brennstoffpumpe 11 könnten auch derart voreinstellbar ausgestaltet sein, dass das Ventil 8 über die Antriebsvorrichtung in fest vorherbestimmte Stellungen gebracht werden kann, beispielsweise in 5 oder 7 Stellungen, wobei jede Stellung des Ventils 8 eine vorbestimmte Wärmeleistung Q1 bis Q7 zur Folge hat, welche als Niedertemperaturwärme insbesondere zu Heizzwecken zur Verfügung steht.

Durch ein entsprechendes Ansteuern der zugeführten Zuluftmenge sowie der zugeführten Brennstoffmenge pro Zeiteinheit kann auch die Wärme beziehungsweise die Temperatur in der Brennkammer 3 und dadurch die an den Stirlingmotor übertragene Wärmemenge beeinflusst werden, sodass auch die vom Generator erzeugte elektrische Leistung beeinflussbar ist. Bevorzugt wird die Wärmequelle jedoch derart betrieben, dass die Wärme beziehungsweise die Temperatur in der Brennkammer 3 konstant bleibt, sodass der Generator eine konstante elektrische Leistung erzeugt, wogegen die abgegebene Wärmeleistung variiert werden kann.

Anstelle des in Figur 2 dargestellten Ölbrenners 2 könnte auch ein Gasbrenner verwendet werden. Es müsste einzig die als Brennstofflanze ausgestaltete Brennstoffzuleitung 2a ausgetauscht werden. Ansonst wäre die Wärmequelle 1 mit Gasbrenner identisch zu der in Figur 2 dargestellten Wärmequelle 1 mit Ölbrenner 2. Diese Eigenschaft ergibt den Vorteil, dass die Wärmequelle 1 zum Betrieb mit einem Gas- oder Ölbrenner im Wesentlichen identisch ausgestaltet ist, und dass jederzeit ein Wechsel von Öl- zu Gasbetrieb oder umgekehrt möglich ist, indem einfach die Brennstofflanze 2a ausgetauscht wird. Ansonst sind keine Änderungen an der Wärmequelle 1 erforderlicht.

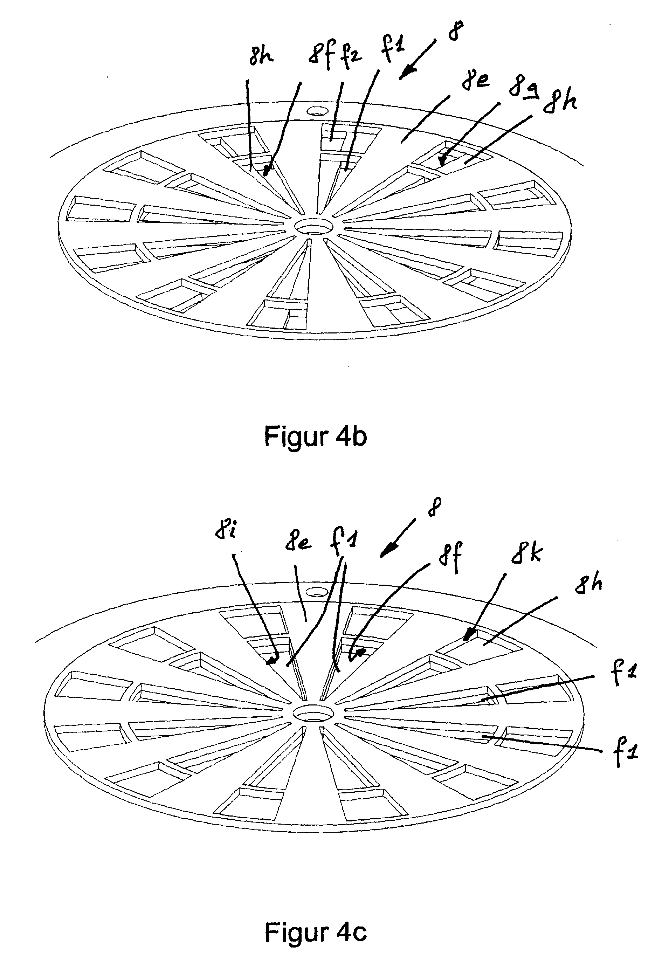

Die Figuren 4a, 4b und 4c zeigen das in Figur 2 dargestellte Dreiwegregelventil 8 im Detail. Das Regelventil 8 ist mit einem einzigen, nicht dargestellten Antriebsmittel betätigbar. Das Ventil 8 umfasst ein feststehenden Ventilteil 8h, welches als eine kreisförmige Grundplatte ausgestaltet ist, mit einer Mehrzahl in Umfangsrichtung beabstandet angeordneten inneren feststehenden Durchlassöffnungen 8f und äusseren feststehenden Durchlassöffnungen 8g. Die äusseren feststehenden Durchlassöffnungen 8g münden, wie in Figur 2 dargestellt, in den darunter liegenden zweiten Zuluftkanal 2e, wogegen die inneren feststehenden Durchlassöffnungen 8h in den ersten Zuluftkanal 2c münden. Die über die inneren feststehenden Durchlassöffnungen 8f eintretende Luft gelangt somit ausschliesslich in den ersten Zuluftkanal 2c, wogegen die in die äusseren feststehenden Durchlassöffnungen 8g eintretende Luft ausschliesslich in den zweiten Zuluftkanal 2e gelangt. Über dem feststehenden Ventilteil 8h ist, wie in den Figuren 4a, 4b und 4c dargestellt, ein bewegliches Ventilteil 8e angeordnet, welches im dargestellten Ausführungsbeispiel als eine um eine Drehachse 8d drehbar gelagerte Drehscheibe 8e ausgestaltet ist, wobei die Drehscheibe 8e ebenfalls eine Mehrzahl von in Umfangsrichtung beabstandet angeordneten inneren drehbaren Durchlassöffnungen 8i und äusseren drehbaren Durchlassöffnungen 8k aufweist. Durch ein Drehen der Drehscheibe 8e wird daher die dem ersten beziehungsweise zweiten Zuluftkanal 2c, 2e zum Einströmen zur Verfügung stehende Gesamtdurchtrittsfläche F1, F2 variiert. Die erste Gesamtdurchtrittsfläche F1 ist die Summe der ersten Teildurchtrittsflächen f1 und die zweite Gesamtdurchtrittsfläche F2 ist die Summe der zweiten Teildurchtrittsflächen f2, wobei die Grösse der Teildurchtrittsflächen f1,f2 und somit natürlich auch der Gesamtdurchtrittsflächen F1, F2 durch die gegenseitige Stellung der Durchlassöffnungen 8f und 8i beziehungsweise 8g und 8k bestimmt ist. Figur 4a zeigt die Drehscheibe 8e in der bereits in Figur 2 dargestellten Stellung, in welcher die äusseren Durchlassöffnungen 8g und 8k vollständig geöffnet sind, und die inneren Durchlassöffnungen 8f und 8i vollständig geschlossen sind, sodass die zweiten Teildurchtrittsflächen f2 vollständig geöffnet sind, und somit auch deren Summe, die Gesamtdurchtrittsfläche F2. Figur 4c zeigt die Drehscheibe 8e in einer Stellung, in welcher die inneren Durchlassöffnungen 8f und 8i vollständig geöffnet sind, und die äusseren Durchlassöffnungen 8g und 8k vollständig geschlossen sind, sodass die ersten Teildurchtrittsflächen f1 vollständig geöffnet sind, und dadurch auch die Gesamtdurchtrittsfläche F1. Figur 4b zeigt die Drehscheibe 8e in einer Zwischenstellung, in welcher sowohl die ersten als auch die zweiten Teildurchtrittsflächen f1 und f2 teilweise geöffnet sind, was bedeutet, dass die Teildurchtrittsflächen f1 und f2 beziehungsweise deren Gesamtdurchtrittsflächen F1 und F2 einen kleineren Wert aufweisen als in der in Figur 4a beziehungsweise Figur 4c dargestellten Stellung. In der in Figur 4b dargestellten Zwischenstellung wird sowohl dem ersten wie auch dem zweiten Zuluftkanal 2c, 2e Zuluft zugeführt wird. Aus Figur 4b ist ersichtlich, dass durch ein Drehen der Drehscheibe 8e die Gesamtdurchtrittsfläche F1 beziehungsweise F2 gegengleich veränderbar ist, indem die Gesamtdurchtrittsfläche F1 des ersten Zuluftstroms A1 vergrössert und die Gesamtdurchtrittsfläche F2 des zweiten Zuluftstromes A2 verkleinert wird, oder umgekehrt.

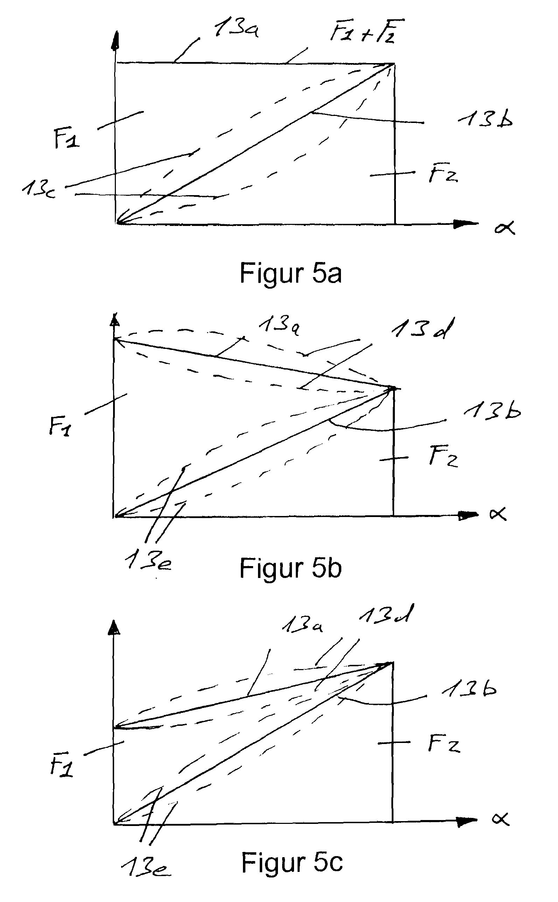

Die Grösse der Gesamtdurchtrittsfläche F1 und F2 in Abhängigkeit der gegenseitigen Verschiebung von beweglichem Ventilteils 8e zu feststehendem Ventilteil 8h wird mit Hilfe des in den Figuren 4a bis 4c dargestellten Drehventils näher erläutert. Die geometrische Ausgestaltung der Durchlassöffnungen 8f, 8g, 8i und 8k sowie deren gegenseitige Überlappungen in Funktion des Drehwinkels bestimmt die Grösse der Gesamtdurchtrittsfläche F1 und F2 in Funktion des Drehwinkels der Drehscheibe 8e. Der Verlauf der Gesamtdurchtrittsfläche F1 als auch der Gesamtdurchtrittsfläche F2 als auch deren Summe F1 + F2 in Funktion des Drehwinkels α kann, wie in den Figuren 5a, 5b und 5c dargestellt, auf unterschiedlichste Weise erfolgen.

Figur 5a zeigt die Charakteristik des in den Figuren 4a bis 4c dargestellten Ventils 8 mit, wie durch 13a dargestellt, in Funktion des Drehwinkels α konstanter Summe F1 + F2, wobei sich die einzelnen Gesamtdurchtrittsflächen F1 und F2 in Funktion des Drehwinkels, wie mit 13b dargestellt, linear verändern. Dieser Zusammenhang könnte auch, wie mit der strichlierten Kurve 13c dargestellt, nichtlinear verlaufen. Bei diesem Ventil ist somit der maximale Wert der Gesamtdurchtrittsflächen F1 und F2 gleich gross.

Figur 5b zeigt die Charakteristik eines weiteren Ventils 8 mit, wie durch 13a dargestellt, in Funktion des Drehwinkels α abnehmender Summe F1 + F2, wobei sich die einzelnen Gesamtdurchtrittsflächen F1 und F2 in Funktion des Drehwinkels, wie mit 13b dargestellt, linear verändert. Der maximale Wert der Gesamtdurchtrittsfläche F1 ist somit grösser als der maximale Wert der Gesamtdurchtrittsfläche F2. Der Verlauf 13a und/oder der Verlauf 13b könnte jedoch auch, wie mit 13d, 13e dargestellt, nichtlinear verlaufen.

Figur 5c zeigt die Charakteristik eines weiteren Ventils 8 mit, wie durch 13a dargestellt, in Funktion des Drehwinkels α zunehmender Summe F1 + F2 und linear veränderlicher Kurve 13b. Der maximale Wert der Gesamtdurchtrittsfläche F1 ist somit kleiner als der maximale Wert der Gesamtdurchtrittsfläche F2.Der Verlauf 13a und/oder der Verlauf 13b könnte jedoch auch, wie mit 13d, 13e dargestellt, nichtlinear verlaufen.

Sofern die beiden Zuluftkanäle 2c und 2e der Wärmequelle 1 denselben Luftwiderstand aufweisen, weist die der Brennkammer 3 zugeführte Luftmenge denselben, wie in den Figuren 5a bis 5c dargestellten Verlauf auf. Die beiden Zuluftkanäle 2c und 2e der Wärmequelle 1 weisen üblicherweise jedoch einen unterschiedlichen Luftwiderstand auf. Unter Verwendung eines Ventils 8 mit der in Figur 5a dargestellten, linearen Charakteristik hat dies zur Folge, dass sich die gesamte der Brennkammer 3 zugeführte Luftmenge in Funktion des Drehwinkels α verändert. In einer vorteilhaften Ausführungsform wird das Ventil 8, beziehungsweise dessen Gesamtdurchtrittsflächen F1 und F2 in Funktion des Drehwinkels α derart ausgestaltet, dass der Effekt der unterschiedlichen Luftwiderstände kompensiert wird, und somit die gesamte über die Zuluftkanäle 2c und 2e zugeführt Luftmenge konstant bleibt, unabhängig vom Drehwinkel α des Ventils 8.

Der in den Figuren 5a bis 5c dargestellte Zusammenhang gilt natürlich nicht nur für Ventile 8 mit durch Drehen verschiebbare Ventilteile 8e. Es könnte dazu auch ein linear verschiebbares Ventilteil 8e verwendet werden. Der in den Figuren 5a bis 5c dargestellte Zusammenhang könnte auch mit zwei separaten Ventilen 8 erzielt werden, wobei jedes der beiden Ventile 8 eine der beiden Gesamtdurchtrittsflächen F1, F2 einstellt, sodass durch eine entsprechende Ansteuerung der beiden Ventile 8 der in den Figuren 5a bis 5c dargestellte Zusammenhang erzeugbar ist.

## Patentansprüche

1. Wärmequelle (1) umfassend eine Brennkammer (3) zur Erzeugung von Wärme mit hohem Temperaturniveau, sowie umfassend einen in die Brennkammer (3) mündenden Brenner (2) und einen Wärmetauscher (4), wobei die Brennkammer (3) Fluid leitend mit einem Abgaskanal (4c) verbunden ist, welcher durch den Wärmetauscher (4) verläuft, und wobei die Wärmequelle (1) einen ersten und einen zweiten Fluid leitenden Kanal (2c,2e) umfasst, über welche ein Zuluftstrom der Brennkammer (3) zuführbar ist, wobei der erste Kanal (2c) derart verläuft, dass der Zuluftstrom ohne einen Wärmeaustausch mit Abgasen der Brennkammer (3) zugeleitet ist, und wobei der zweite Kanal (2e) durch den Wärmetauscher (4) verlaufend der Brennkammer (3) zugeleitet ist, und wobei ein Regelventil (8) derart wirkend angeordnet ist, dass die Verteilung des Zuluftstroms zwischen dem ersten und dem zweiten Kanal (2c,2e) variierbar ist.

2. Wärmequelle nach Anspruch 1, **dadurch gekennzeichnet, dass** das Regelventil (8) derart wirkend ausgestaltet ist, dass der Zuluftstrom entweder nur dem ersten oder nur dem zweiten Kanal (2c, 2e) zuführbar ist.

3. Wärmequelle nach Anspruch 1, **dadurch gekennzeichnet, dass** das Regelventil (8) derart wirkend ausgestaltet ist, dass der Zuluftstrom in variablen Anteilen dem ersten und zweiten Kanal (2c, 2e) zuführbar ist.

4. Wärmequelle nach einem der vorhergehenden Ansprüche, **dadurch gekennzeichnet, dass** diese eine Brennstofffördervorrichtung (11) umfasst, und dass die Brennstofffördervorrichtung (1) und das Regelventil (8) derart ansteuerbar sind, dass mit zunehmendem, dem ersten Kanal (2c) zugeführten Zuluftstrom, dem Brenner (2) eine zunehmende Menge Brennstoff zuführbar ist.

5. Wärmequelle nach einem der vorhergehenden Ansprüche, **dadurch gekennzeichnet, dass** der Brenner (2) als Ölbrenner, als Gasbrenner oder als Brenner für fest Brennstoffe ausgestaltet ist.

6. Wärmequelle nach Anspruch 5, **dadurch gekennzeichnet, dass** zwei unterschiedliche Brennstofflanzen (2a) mit Brennstoffdüse (2b) vorgesehen sind, welche mit dem Brenner (2) austauschbar verbindbar sind, wobei die Brennstofflanzen (2a) für zumindest zwei Brennstoffe aus der Gruppe Öl, Gas und feste Brennstoffe geeignet sind.

7. Wärmequelle nach einem der vorhergehenden Ansprüche, **dadurch gekennzeichnet, dass** das Regelventil (8) eine Grundplatte (8h) mit einer ersten Eintrittsöffnung (8a) zum ersten Fluid leitenden Kanal (2c) und einer zweiten Eintrittsöffnung (8c) zum zweiten Fluid leitenden Kanal (2e) aufweist, und dass das Regelventil (8) eine bezüglich der Grundplatte (8h) verschiebbare Abdeckung (8e) aufweist, welche den freien Strömungsquerschnitt der Eintrittsöffnungen (8a,8c) in Abhängigkeit der Stellung der Abdeckung (8e) verändert.

8. Wärmequelle nach Anspruch 7, **dadurch gekennzeichnet, dass** die Abdeckung (8e) scheibenförmig ausgestaltet ist und bezüglich der Grundplatte (8h) um eine Achse (8d) drehbar gelagert ist.

9. Wärmequelle nach Anspruch 7 oder 8, **dadurch gekennzeichnet, dass** sich der freie Strömungsquerschnitt der Eintrittsöffnungen (8a,8c) nicht linear in Abhängigkeit der Stellung der Abdeckung (8e) verändert.

10. Verfahren zum Betrieb einer Wärmequelle (1) nach einem der vorhergehenden Ansprüche, **dadurch gekennzeichnet, dass** die abgegebene Wärmeleistung **dadurch** variiert wird, dass dem ersten Fluid leitenden Kanal (2c) mehr Luft, dem zweiten Fluid leitenden Kanal (2e) weniger Luft, und dem Brenner (2) mehr Brennstoff zugeführt wird, um die abgegebene Wärmeleistung zu erhöhen, und dass dem ersten Fluid leitenden Kanal (2c) weniger Luft, dem zweiten Fluid leitenden Kanal (2e) mehr Luft, und dem Brenner (2) weniger Brennstoff zugeführt wird, um die abgegebene Wärmeleistung zu reduzieren.

11. Blockheizkraftwerk umfassend eine Stirlingmaschine sowie eine Wärmequelle (1) nach einem der Ansprüche 1 bis 9 zum Beheizen der Stirlingmaschine.
